Europäisches Patentamt

European Patent Office

Office européen des brevets

(11) Veröffentlichungsnummer: **0 186 877**
**A2**

# (12) EUROPÄISCHE PATENTANMELDUNG

(21) Anmeldenummer: 85116335.2

(22) Anmeldetag: 20.12.85

(51) Int. Cl.⁴: **G 06 F 15/40**

(30) Priorität: 29.12.84 DE 3447824

(43) Veröffentlichungstag der Anmeldung: 09.07.86
Patentblatt 86/28

(84) Benannte Vertragsstaaten: **AT CH DE FR GB IT LI**

(71) Anmelder: **Baus, Heinz Georg, Wartbodenstrasse 35,
CH-3626 Hünibach-Thun (CH)**

(72) Erfinder: **Baus, Heinz Georg, Wartbodenstrasse 35,
CH-3626 Hünibach-Thun (CH)**

(74) Vertreter: **Klose, Hans, Dipl.-Phys. et al,
Kurfürstenstrasse 32, D-6700 Ludwigshafen (DE)**

(54) **Einrichtung mit einer Speichereinheit.**

(57) Eine Einrichtung für den Verkauf und/oder zur Ausgabe
von Informationen über ein Produkt oder dergleichen enthält
eine Speichereinheit (4) für Informationsmengen, insbesondere als Laser-Bildplattengerät, und ferner ein Steuergerät (8)
sowie ein Anzeigegerät (6), das zweckmäßig als Monitor ausgebildet ist. Diese Einrichtung soll dahingehend weitergebildet
werden, daß bei einer einfachen Bedienbarkeit eine schnelle
und zuverlässige Ausgabe der gewünschten Informationsmenge ermöglicht wird. Hierzu wird vorgeschlagen, daß mit
dem Steuergerät (8) eine Eingabeeinheit (16) mit Tasten (18)
oder dergleichen verbunden ist, und daß ein Speicher (10) für
Adreß- und/oder Funktionssignale vorgesehen ist. Diese Signale sind mittels eines Rechners (10) abrufbar und mittels
einer Abfrageeinheit (14) ist entsprechend der jeweils betätigten Taste der Eingabeeinheit der Speicher (12) zur Ausgabe
des gewünschten Signales aktivierbar.

I

Anmelder:   Heinz Georg Baus
            Wartbodenstr. 35
            CH-3626 Hünibach-Thun

## Einrichtung mit einer Speichereinheit

Die Erfindung bezieht sich auf eine Einrichtung mit einer Speichereinheit für Informationsmengen, mit einer Eingabeeinheit, die Tasten oder dergleichen aufweist, mit einem Speicherplätze enthaltenden Speicher und mit einem Rechner, der insbesondere in einer Steuereinheit enthalten ist, um bei Betätigung einer der Tasten den Speicher zu aktivieren und auf einem Anzeigegerät die Informationsmengen darzustellen.

In Supermärkten, Kaufhäusern werden Informationen über die zum Verkauf anstehenden Produkte, über den Standort, über Produktanwendungen grundsätzlich von Verkäufern oder Verkaufsberatern dem Kunden übermittelt. Ferner besteht auf Ausstellungen, in Flughäfen oder Bahnhöfen das Bedürfnis, den Benutzern Informationen über Standorte, Ziele, Bahn- oder Flugverbindungen oder sonstiges darzubieten. Es mangelt oftmals an Personal, um die unterschiedlichsten Informationen dem Kunden oder Benutzer umfassend und schnell darzubieten; auf die Personalkosten sei hier hingewiesen. So sind bereits zur Verkaufsförderung Systeme bekannt geworden, die als Informationsspeicher Videorekorder oder Laser-Bildplattengeräte enthalten, wobei mittels eines Monitors die abgespeicherten Informationen dem Benutzer dargeboten werden. Werden bei einem solchen System die Informationsmengen fortlaufend und ohne eine aktive Eingriffsmöglichkeit dargeboten, so bleibt der Benutzer passiv, und die Aufmerksamkeit erlahmt sehr schnell. Die Effektivität und Wirtschaftlichkeit derartiger Systeme ist gering.

In der DE-OS 33 04 859 ist eine Schaltungsanordnung beschrieben, die zum Eingeben und wahlweisen Ändern bzw. Korrigieren von Texten, Grafiken oder dergleichen dient. Diese Einrichtung gelangt für den Bildschirmtext zum Einsatz und enthält als Eingabegerät ein Keyboard mit einer alpha-numerischen Tastatur sowie Funktionstasten. Diese Funktionstasten dienen zum Abruf vorgegebener Korrespondenzen, die in einem Codierspeicher gespeichert sind. Mittels eines Editors werden die Speicherplätze des Codierspeichers den von einer Tastaturtabelle eingehenden Informationen zugeordnet. Die Speicherinhalte der Speicherplätze des Codierspeichers werden codiert an einen BTX-Decoder ausgegeben. Mit dieser bekannten Einrichtung ist es möglich auf dem Anzeigegerät eine Vielzahl von Sonderzeichen, Farben usw. in den laufenden BTX-Text mittels der Tastatur einzugeben. Zur Ausgabe von Informationsmengen über ein Produkt oder dergleichen ist die vorbekannte Einrichtung nicht geeignet, zumal die Bedienung nur bei entsprechenden Vorkenntnissen einem Benutzer möglich ist. Es ist nicht möglich Bildfolgen, insbesondere Werbespots an einen Betrachter mittels des Anzeigegerätes auszugeben.

Ferner ist gemäß einer Firmendruckschrift der Pergamon International Information Corp. ein Computersystem zur Suche und Darstellung sowohl von Text als auch von Zeichnungen bekannt. Dieses System enthält ein Bildplattengerät und dient insbesondere für Patentrecherchen. Durch Betätigen von Tasten eines Keyboard können die gewünschten Seiten der Bildplatte abgefragt werden. Bildsequenzen, wie sie beispielsweise für einen Werbespot fortlaufend hintereinander benötigt werden, können mit diesem System nicht dargeboten werden. Ferner ist ein online-Anschluß an eine Datenbank erforderlich, um Zugriff zu dem gesamten Bestand der Patentliteratur zu erhalten. Zur Verkaufsförderung oder zur Ausgabe von produktspezifischen Informationen an einen Kunden in einem Warenhaus ist dieses System nicht vorgesehen.

Der Erfindung liegt daher die Aufgabe zugrunde, eine Einrichtung der eingangs genannten Art dahingehend weiterzubilden, daß ein Benutzer in optimaler Weise angesprochen wird und aktiv die Informationsausgabe beeinflussen kann. Der Benutzer soll ohne besondere Vorkenntnisse in der Lage sein, die Einrichtung zu betätigen und in einfacher Weise mit der Einrichtung den Dialog aufnehmen können. Fehlbedienungen, die bei der Eingabe von mehreren Nummern sehr leicht eintreten können, sollen vermieden werden, und ein schneller, zuverlässiger Zugriff zu den gewünschten Informationsmengen soll gewährleistet sein. Die Einrichtung soll mit einem geringen Aufwand an die jeweiligen Einsatzbedingungen anpassbar sein, wobei überwiegend im Handel zur Verfügung stehende Baukomponenten zum Einsatz gelangen sollen. Die Steuerung soll mit einem geringen Aufwand an Bauteilen erfolgen, und eine Anpassung und Änderung entsprechend dem jeweils zum Einsatz gelangenden Informationsträger, insbesondere Bildplatte, soll mit geringem Aufwand durchführbar sein. Die Einrichtung soll in klarer und übersichtlicher Weise einem Benutzer sowohl einen ersten Überblick über die anzubietenden Produkte, Gegenstände oder einen Lageplan usw. ermöglichen als auch auf Wunsch die gewünschten Detailinformationen liefern.

Zur Lösung dieser Aufgabe wird vorgeschlagen, daß in den Speicherplätzen des Speichers vorgebbare Befehlsfolgen als Statusblöcke vorgesehen sind, die mittels des Rechners abfragbar sind, daß den Tasten jeweils in den Statusblöcken entsprechende Speicherplätze zugeordnet sind, daß beim Betätigen einer der Tasten aus dem vom Rechner momentan aufgerufenen Statusblock der entsprechende Speicherplatz zur Abgabe eines Adressignales aktiviert wird, um insbesondere einen anderen Statusblock abzufragen, wobei ferner die in der Speichereinheit gespeicherten Informationsmengen, die zur Verkaufsförderung dienen bzw. Informationen über ein Produkt oder dergleichen enthalten, abgerufen werden.

- 4 -

Die erfindungsgemäße Einrichtung zeichnet sich durch einen funktionsgerechten Aufbau aus und ermöglicht in besonders einfacher Weise einen schnellen Zugriff und Auswahl einer vom Benutzer gewünschten Information. Das vorgeschlagene Informations- und Anzeigesystem über Produkte, Verarbeitungshinweise, Standorte oder dergleichen erfordert einen vergleichsweise geringen Kostenaufwand, zumal die Speichereinheit bevorzugt als ein handelsübliches Laser-Bildplattengerät und das Anzeigegerät als ein konventionelles Fernsehgerät bzw. Monitor ausgebildet ist. Im Rahmen der Erfindung können auch mechanisch-elektronische VHD-Bildplatten, Videorekorder oder dergleichen zum Einsatz gelangen. Die Eingabeeinheit kann aus einer einfachen Tastatur ausgebildet sein, wobei mehrstellige Ziffern nicht eingegeben werden müssen, sondern die Eingabe durch Betätigung einer einzigen Taste im Rahmen der Erfindung erfolgt. So muß mit der Eingabeeinheit nicht eine Kapiteladresse des mit dem Bildplattengerät anzusteuernden Kapitels der Bildplatte eingegeben werden, so daß insoweit durch falsche Eingabe bedingte Fehler vermieden werden. Ist beispielsweise auf dem Bildschirm ein Auswahlmenu für verschiedene Produkte oder unterschiedliche Standorte oder ähnliches aufgeführt, so ist den jeweiligen Möglichkeiten im Rahmen der Erfindung eine Ziffer von 0 bis 9 oder auch ein entsprechender Buchstabe zugeordnet. Nach Betätigen der gewünschten, einzigen Taste der Eingabeeinheit wird in das Steuergerät ein Eingabesignal gegeben. Mittels der Abfrageeinheit erfolgt die Zuordnung der betätigten Taste zu der entsprechenden Adresse im Speicher, aus welchem das gewünschte Adress-Signal aktiviert wird. Erfindungsgemäß stehen die anzuwählenden Adress-Signale in der Liste des Speichers nach dem Adress-Signal für das Auswahlmenü, wodurch eine eindeutige Zuordnung gegeben ist. Das dem jeweiligen Auswahlmenü zugeordnete Adress-Signal wird aufgerufen und das zugeordnete Bild oder eine Bildsequenz werden dann mittels des Anzeigegerätes angezeigt.

In einer besonderen Weiterbildung ist vorgesehen, daß in einem Speicher, insbesondere des Steuergerätes, die Adress-Signale der aufrufbaren Bilder entsprechend der vorgegebenen Hierarchie ihrer Reihenfolge derart gespeichert sind, daß ein Benutzer wahlweise das nächstfolgende oder das zuvor bereits angezeigte Bild aufrufen kann. Ein Benutzer kann über die Eingabeeinheit durch Aktivieren des Speichers zuvor bereits gesehene
Bilder noch einmal aufrufen, um beispielsweise zusätzlich zu
den bisher erhaltenen Informationen über ein bestimmtes Produkt parallele Informationen über ein vergleichbares Produkt
zu erhalten. Mittels des Rechners, der bevorzugt als ein Mikroprozessor ausgebildet ist, wird der Speicher bzw. werden
die im Speicher aufgelisteten Adressen oder Funktionssignale
im Rahmen der Erfindung nacheinander abgefragt. Die erfindungsgemäße Liste enthält darüberhinaus auch sogenannte Zeiger, um bei Bedarf nachfolgende Speicherplätze zu überspringen
oder auch zurückzufahren. Ist beispielsweise an die Abfrageeinheit das Funktionssignal zur Feststellung der betätigten
Taste gegeben und diese festgestellt, so wird über den der
Taste zugeordneten Zeiger auf die zugeordnete Adresse gesprungen, um beispielsweise eine Bildsequenz zu starten. Mittels
der Eingabeinheit ist der Adress-Speicher in der Steuereinheit
ansteuerbar, um das nächste Bild oder die nächste Bildsequenz
aus der Speichereinheit abzurufen. Interessiert beispielsweise
den Benutzer das mit dem Anzeigegerät dargestellte Bild nicht,
oder hat er die Informationen bereits ausgewertet, so kann er
durch unmittelbaren Eingriff über die Eingabeeinheit zu dem
nächsten Bild weiterschalten. Das Interesse des Benutzers
bleibt damit ununterbrochen aufrechterhalten, und er ermüdet
nicht durch eine allzu lange und von ihm nicht erwünschte
Darstellung.

Gemäß einer besonderen Weiterbildung ist ein Zwischenspeicher
vorgesehen, aus welchem Ton- oder Textinformationen abrufbar
und insbesondere über eine Mischstufe dem Ausgabegerät zuführbar sind, wobei der Zwischenspeicher mittels der genanten
Adress- oder Funktionssignale ansteuerbar ist. Auf diese überraschend einfache Weise können ggfs. auch nachträglich noch
zusätzliche Informationen eingeblendet werden, ohne daß hierzu
eine neue Bildplatte oder ein ähnliches Speichermedium neu
angefertigt werden müßte. Ferner wird mit dieser wesentlichen
Ausgestaltung auch die Möglichkeit geschaffen, ein Standbild
mit Tonsignalen zu unterlegen. Zweckmäßig werden diese Tonsignale ebenfalls auf dem Speichermedium, insbesondere der Bildplatte, abgespeichert, und zwar zwischen den einzelnen Bildern. Wird nach dem Start der Einrichtung zunächst eine Bildsequenz abgespielt, so können gleichzeitig Tonsignale in den Zwischenspeicher überspielt werden. Wird dann ein Standbild auf dem Monitor angezeigt, so wird das gewünschte Tonsignal aus dem Zwischenspeicher abgerufen. Die nach den bekannten Fernsehnormen von Bildsignalen freien Zeilen werden erfindungsgemäß genutzt für Tonsignale, die nach Zwischenspeicherung gleichzeitig mit dem zugeordneten Standbild wieder abgefragt und ausgegeben werden.

In einer wesentlichen Weiterbildung ist zwischen der Speichereinheit und dem Steuergerät eine standardisierte Schnittstelle, insbesondere V-24-Schnittstelle, vorgesehen. Die Einrichtung kann somit aus handelsüblichen Baukomponenten, nämlich Fernsehgerät bzw. Monitor sowie Laser-Bildplattengerät, im Rahmen der Erfindung aufgebaut sein, wodurch nicht unwesentliche Kostenvorteile erreicht werden. Das Steuergerät und die mit diesem verbundene Eingabeinheit werden in der erfindungsgemäßen Weise ausgebildet.

Die Erfindung soll nachfolgend an Hand der in der Zeichnung dargestellten Ausführungsbeispiele näher erläutert werden. Es zeigen:

Fig. 1      Eine prinzipielle Darstellung der Einrichtung als Blockschaltbild,

Fig. 2      schematisch den Aufbau und die Abfolge der verschiedenen Informationen und Bildsequenzen,

Fig. 3      eine Prinzipdarstellung der im Speicher enthaltenen Statusblöcke sowie deren Verknüpfungen.

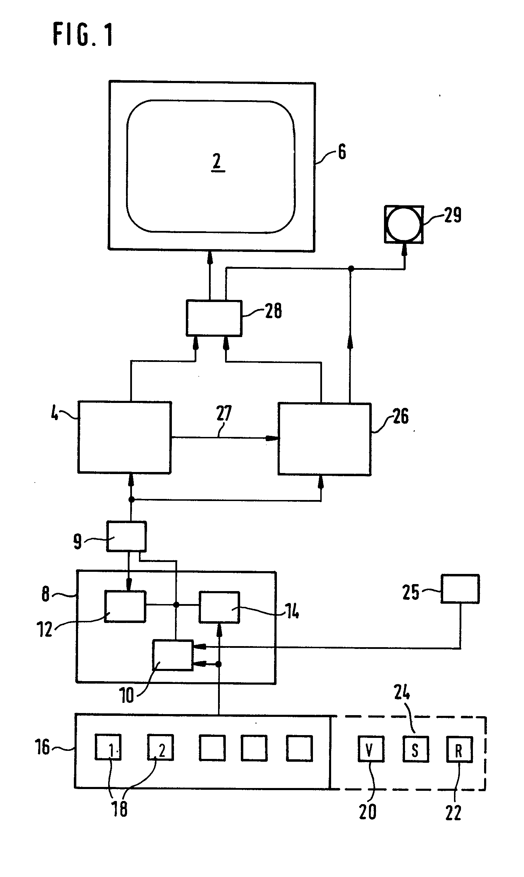

In Fig. 1 ist der Bildschirm 2 eines Monitors 6 zu sehen, auf welchem in bekannter Weise Informationsmengen dargeboten werden können. Diese Informationen können sowohl als Standbild als auch als fortlaufende Bilder beispielsweise eines Werbespots dargeboten werden. Der Monitor bzw. der Bildschirm 2 erhält die Informationen aus einer Speichereinheit 4, die insbesondere als ein Laser-Bildplattengerät ausgebildet ist. Die Informationsmengen sind auf der Bildplatte in einer Vielzahl von Kapiteln abgespeichert, wobei durch entsprechende Ansteuerung eine fortlaufende Ausgabe nach Art eines Filmes oder auch nur ein Standbild abgegeben werden kann. Ferner ist jedem einzelnen Bild einer Bildplatte eine Bildnummer zugeordnet, wobei Bildplatten der üblichen Art bis zu 54 000 einzelne Bilder enthalten können.

Die Speichereinheit 4 ist mit dem Steuergerät 8 verbunden, wobei im Rahmen der Erfindung zweckmäßig eine Schnittstelle 9, und zwar bevorzugt eine standardisierte V-24 Schnittstelle, zwischengeschaltet ist. In dem Steuergerät 8 ist ein Speicher 12 vorgesehen, über welchen die jeweiligen Kapitel oder Einzelbilder der Speichereinheit 4 abrufbar sind. Dieser Adress-Speicher 12 ist ein Massenspeicher, insbesondere ein EPROM oder sonstiger löschbarer und programmierbarer Speicher. Erfindungsgemäß kann der Speicher auch austauschbar sein, so daß bei Bedarf ein entsprechend der jeweiligen Speichereinheit 4 programmierter einsetzbar ist. Im Rahmen der Erfindung können jedoch auch die Adressen unmittelbar in die Speichereinheit 4 eingespeichert sein, um bei Bedarf von dem Steuergerät abgefragt und in den Speicher 12 eingelesen zu werden. Ist der Adress-Speicher 12 in dem Steuergerät 8 vorgesehen, so lassen sich Änderungen relativ einfach vornehmen. Das Steuergerät 8 enthält ferner einen hier als Mikroprozessor ausgebildeten Rechner 10. Mittels des Rechners 10 wird der Inhalt des Speichers 12 sukzessive abgearbeitet. In dem Speicher 12 sind in Form einer Liste nacheinander Adressen und Funktionssignale aufgelistet, und nach dem Einschalten bzw. Start der Einrichtung erfolgt mittels des Rechners 10 nacheinander der Abruf der aufgelisteten Signale. Mittels der Adress-Signale, die den Kapitelnummern bzw. Bildnummern entsprechen, wird aus der Speichereinheit das gewünschte Bild bzw. die gewünschte Bildsequenz abgerufen und auf dem Monitor 2 dargestellt. Im Rahmen
der Erfindung ist es von wesentlicher Bedeutung, daß in dem
Speicher die den jeweiligen Tasten zugeordneten Adressen hintereinander aufgelistet sind, wobei durch Verzweigungen, Zeiger oder Sprungbefehle in der Liste die entsprechende zugeordnete Adresse in der Liste aufgerufen wird.

Es ist ferner eine Abfrageeinheit 14 vorgesehen, die sowohl
mit dem Speicher 12 als auch mit einer Eingabeeinheit 16 mit
Tasten 18 verbunden ist. Anstelle der Tasten können auch kapazitive Sensoren oder dergl. vorgesehen sein. Es versteht
sich, daß ggfs. auch ein dem Adress-Signal des mit dem Bildschirm 2 dargebotenen Bildes entsprechendes anderes Signal der
Abfrageeinheit 14 zugeführt werden kann. Wichtig ist im Rahmen
der Erfindung, daß eine definierte Zuordnung des mit dem Bildschirm 2 angezeigten Bildes und dem Adress- oder sonstigem
Signal besteht. Wesentlich ist ferner, daß im Rahmen der Erfindung in dem Speicher 12 sogenannte Statusblöcke eingegeben
sind, die in besonders übersichtlicher und einfacher Weise die
Eingabe der Signale sowie deren Verarbeitung gewährleisten.
Jeder Statusblock hat grundsätzlich den gleichen Aufbau, wobei
nacheinander Speicherplätze belegt sind mit den Funktionen,
insbesondere: Standbild, Bildsequenz, Tastenabfrage, Taste 1,
Taste 2 usw. Mittels des Rechners wird der Speicher und somit
der jeweilige Statusblock abgearbeitet, wobei entsprechend der
Adresse Standbild, Bildsequenz, Tastenabfrage entsprechende
Funktionssignale an die Speichereinheit 4 oder auch an die Abfrageeinheit 14 gegeben werden. Ferner enthält die Liste bzw.
der Statusblock eine Angabe zu den jeweils möglichen Tasten,
um eine fehlerhafte Eingabe zu erfassen. Sind beispielsweise
dem gerade angezeigten Auswahlmenü nur 6 Möglichkeiten zugeordnet, so kann nur durch Betätigung der Tasten 1 bis 6 über
einen entsprechenden Zeiger das gewünschte Bild bzw. die gewünschte Bildsequenz angefahren werden. Beim Betätigen der
achten Taste wird eine Fehlermeldung ausgegeben. Wird eine zulässige Taste, beispielsweise die vierte Taste betätigt, so
werden mittels des Rechners 10 zunächst die den Tasten 1 bis 3
zugeordneten Speicherplätze abgefragt und in der Abfrageeinheit 14 der Vergleich durchgeführt. Nachfolgend wird aufgrund der Übereinstimmung des Eingabesignales der vierten Taste zunächst die zugeordnete Adresse des Zeigers bestimmt, um erfindungsgemäß zu der zugeordneten Adresse in der Liste des Speichers 12 zu verzweigen.

Im Rahmen dieser Erfindung ist einer besonderen Taste, zweckmäßig der Taste Null, die Adresse des Blockes des übergeordneten Astes zugeordnet. Damit wird in einfacher Weise auf den übergeordneten Ast in der Hierarchie der aufgelisteten Adressen zurückgesprungen. Mit anderen Worten, durch Betätigen der Taste Null wird im Rahmen der Erfindung das zuvor angezeigte Auswahlmenü erneut vom Benutzer aufgerufen. So kann auf dem Bildschirm ein Auswahlmenu beispielsweise für verschiedene Produkte oder über verschiedene Standorte oder Zielorte dargeboten werden, wobei dem jeweiligen Produkt oder Zielort eine Ziffer von 1 bis 9 zugeordnet ist. Wünscht ein Benutzer jetzt weitere Informationen zu dem Produkt oder dem Zielort, so muß er mit der Eingabeeinheit 16 lediglich eine Taste 18 mit der entsprechenden Ziffer drücken, um ein entsprechendes Signal auf die Abfrageeinheit 14 zu geben. Mittels der Abfrageeinheit 14 erfolgt also die Zuordnung des angewählten Produktes, Ortes oder dergleichen mit dem gerade angezeigten Auswahlmenu. Es muß also nicht unmittelbar die Kapitelnummer oder ein Kapitelcode von dem Benutzer mittels der Eingabeeinheit 16 eingegeben werden, sondern nur eine einzige Ziffer, wodurch Bedienungsfehler erheblich reduziert werden, und die Bedienung insgesamt wesentlich vereinfacht wird.

Damit der Benutzer weiterschalten kann, befindet sich gemäß einer besonderen Ausgestaltung auf der Eingabeinheit 16 eine weitere Taste 20, um in dem gesuchten Ablauf unmittelbar vorwärts zu schalten. Dies erfolgt durch Betätigen einer Taste, mittels der Adress-Speicher 12 direkt angesteuert wird und das nächste Bild bzw. die nächste Bildsequenz aus der Speichereinheit abruft. Die Eingabeeinheit 16 enthält ferner eine Taste 22, mit welcher ein Benutzer auch ein bereits zuvor gesehenes Bild wieder über das Steuergerät bzw. den Adress-Speicher aufrufen kann. Schließlich ist eine Stop-Taste 24 vorhanden, um einen Abbruch des Ablaufes zu erreichen, und gleichzeitig an den Anfang des gesamten Ablaufplanes zu gelangen.

Mit dem Steuergerät 18 ist ein weiterer Speicher 26 verbunden, in welchem zusätzliche Text- oder Tonsignale abgespeichert sind. Mit diesem Speicher können auch Texteinblendungen, insbesondere über neue Modelle, geänderte Leistungsdaten usw., zusätzlich eingegeben sein, wodurch eine hohe Flexibilität der Einrichtung gegeben ist. Die Signale des weiteren Speichers 26 werden einem Mischer 28 zugeführt, um über den Monitor 6 entweder gemischt oder auch zeitlich versetzt zu den Informationsmengen der Speichereinheit 4 ausgegeben zu werden. Es ist ferner ein Lautsprecher 29 vorgesehen, mit welchem Tonsignale ausgegeben werden können. Dieser Lautsprecher kann entweder direkt von dem weiteren Speicher 26 oder aber auch über die Mischstelle 28 eingespeist werden. Erfindungsgemäß ist ein Sensor 25 vorgesehen, der an das Steuergerät 8 angeschlossen ist und zur Aktivierung des Speichers 10 dienen kann. Dieser Sensor 25 ist insbesondere als ein Infrarotsensor oder eine Lichtschranke ausgebildet. Der Sensor dient zur Erfassung eines potentiellen Benutzers, der in die Nähe der Tastatur 16 oder der gesamten Einrichtung gelangt. Wird mit dem Sensor ein Benutzer erfaßt, so wird die erfindungsgemäße Einrichtung aktiviert, um beispielsweise über den Lautsprecher 29 eine Mitteilung an den potentiellen Benutzer zu geben, beispielsweise des Inhalts: "Testen und benutzen Sie unser Produktinformationssystem". Einerseits wird damit die insbesondere für das Verkaufspersonal störende fortwährende Geräuschkulisse vermieden und andererseits wird aber ein Benutzer, der in den Einzugsbereich, beispielsweise in einem Radius von 2 m, gelangt, unmittelbar angesprochen, ohne daß andere Personen im Kaufhaus sich belästigt fühlen müssen. Der Sensor 25 kann im Rahmen der Erfindung ebenso wie die Eingabeeinheit 16 unmittelbar auf den Rechner 10 geschaltet sein, ohne über die Abfrageeinheit 14 zu gehen.

In einer wesentlichen Ausgestaltung dient der Speicher 26 als Zwischenspeicher für insbesondere auf der Bildplatte der Speichereinheit 4 abgespeicherten Tonsignale. Bekanntlich können gemäß den Fernsehnormen parallel zu den Bildsignalen auch auf
zwei Tonspuren für Stereo Tonwiedergabe Tonsignale aufgezeichnet sein. Wird für die Bildsequenzen nur eine Tonspur (Monowiedergabe) genutzt, so können im Rahmen der Erfindung auf der
zweiten Tonspur die Tonsignale für die Standbilder abgespeichert werden. Wie durch die Verbindung 27 angedeutet, werden
beim Abspielen einer Bildsequenz die letztgenannten Tonsignale
in den Zwischenspeicher 26 gegeben. Wird ein Standbild aus dem
Speicher 4 abgerufen, so wird gleichzeitig auf den Zwischenspeicher 26 ein Signal gegeben, um die dem Standbild zugeordneten Tonsignale abzurufen. Ferner sind in einer wesentlichen,
alternativen Ausführung die Tonsignale auf Zeilen zwischen den
einzelnen Bildern bzw. Halbbildern abgespeichert. Die Signaldichte auf derartigen Zwischenzeilen ist erheblich größer als
auf den parallelen Tonspuren, wobei ferner auch ohne weiteres
eine Stereowiedergabe ermöglicht wird.

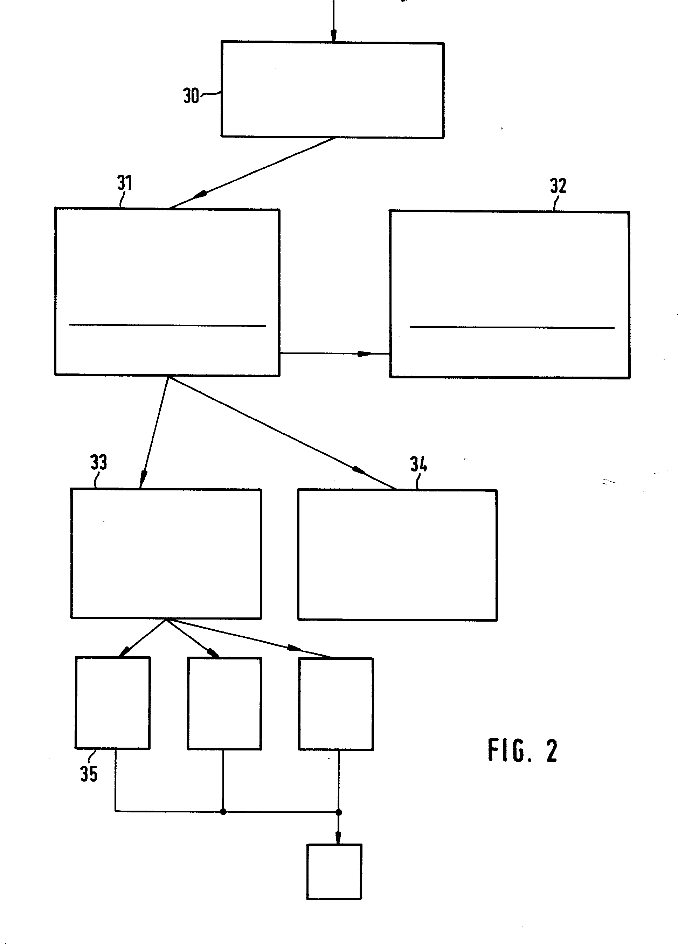

In Fig. 2 ist das Prinzip des Ablaufplanes mit den anzuzeigenden Bildern bzw. Bildsequenzen dargestellt. Nach dem Einschalten der Einrichtung oder Betätigung der Vorwärts-Taste 22 oder
über den Sensor 25 wird über das Steuergerät von der Bildplatte eine erste Bildsequenz mit einem kurzen Informationsspot
über die Einrichtung sowie deren Bedienung abgerufen. Dies ist
durch den Block 30 dargestellt. Nach einer vorgegebenen Zeit
oder auch nach Betätigung der oben erwähnten Vorwärts-Taste 22
wird das nächste Bild entsprechend Block 31 mit dem Monitor
angezeigt. Es ist dem Benutzer ein Auswahlmenu von beispielsweise sechs verschiedenen Maschinen dargeboten, wobei jeder
Maschine eine einzige Ziffer zugeordnet ist. Der Benutzer muß
dann lediglich die der gewünschten Maschine entsprechende
Ziffer bzw. Taste betätigen, um weitere Informationen dieser
Maschine abzurufen. Wichtig ist im Rahmen der Erfindung, daß
nur eine einzige Ziffer oder auch nur ein einziger Buchstabe
oder Symbol eingegeben wird, ohne daß mehrstellige Kapitelnummern oder ähnliches einzugeben sind. Im Rahmen der Erfindung
kann auf der gleichen hierarchischen Ebene, hier durch Eingabe
der Ziffer 6, ein weiteres Bild entsprechend dem Block 32 mit
einem weiteren Auswahlmenu für andere Maschinen dem Benutzer
dargeboten werden. Gibt der Benutzer hingegen die Ziffer 2 ein, so erscheint auf dem Monitor entsprechend Block 33 ein Auswahlmenu hier über Bohrmaschinen, wobei er nunmehr nach unterschiedlichen Fabrikaten, Leistung, Einsatzgebiet usw. für Bohrmaschinen wählen kann. Entsprechend seiner Wahl muß wiederum nur eine einzige Ziffer mittels der Eingabeeinheit in das Steuergerät eingegeben werden, um den gewünschten Film abzurufen. Es sei festgehalten, daß hier nur eine prinzipielle Darstellung der einzelnen Blöcke bzw. Bilder oder Bildsequenzen dargestellt ist, wobei je nach Bedarf noch weitere Blöcke an der gewünschten Stelle zugefügt werden können. Ist der Film entsprechend Block 35 beendet, so wird wieder auf den ersten Block 30 zurückgefahren.

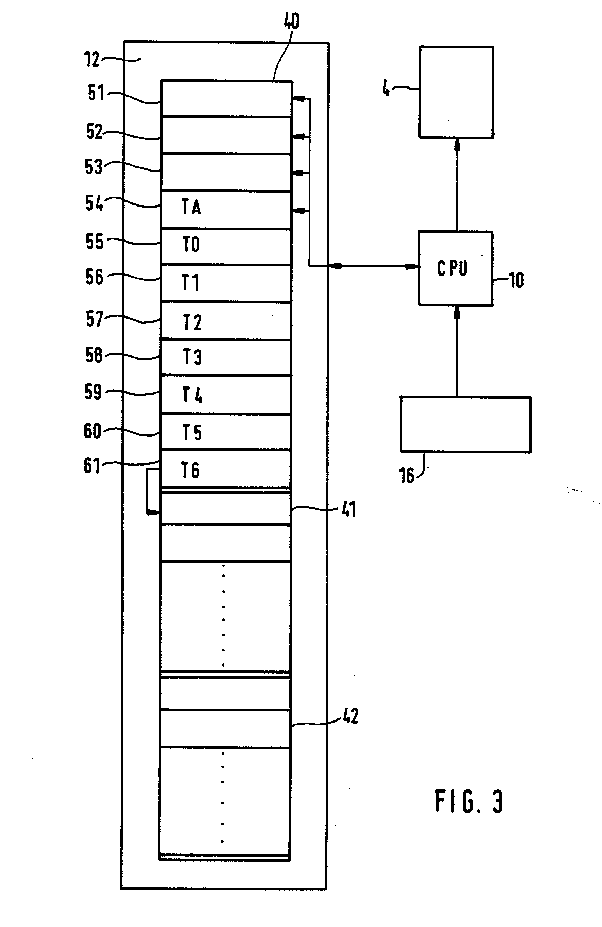

Fig. 3 zeigt eine Prinzipdarstellung des Speichers 12, in welchem Statusblöcke 40, 41, 42 abgespeichert sind. Die Statusblöcke weisen die gleiche Struktur auf und dienen zur Auflistung einer definierten Befehlsfolge. Im Speicher 12 können beispielsweise bis zu 250 derartige Statusblöcke aufgelistet sein, wobei hier der Übersichtlichkeit halber nur die drei ersten Statusblöcke erläutert werden sollen. Der erste Speicherplatz 51 enthält die Adresse des Statusblockes während den nächsten beiden Speicherplätzen 52, 53 die Adress-Signale für Start bzw. Stop einer Bildsequenz oder eines Bildes der Speichereinheit entpricht. Das Adress-Signal Start entspricht der Bildnummer des ersten Bildes einer Bildsequenz und das Adress-Signal Stop entspricht der letzten Bildnummer einer Bildsequenz. In der Speichereinheit 4 sind die entsprechenden Bilder mit den entsprechenden Bildnummern gespeichert. Ist das Adress-Signal Start gleich dem Adress-Signal Stop, so wird immer das gleiche Bild, also ein Standbild, mit der Anzeigeeinheit dargestellt. Der nächste Speicherplatz 54 dient zur Tastenabfrage TA. Sind beispielsweise nur drei der nachfolgend zu erläuternden Tasten mit einem Adress-Signal oder einem Zeiger belegt, so wird sichergestellt, daß auch bei Betätigen einer nichtbelegten Taste eine entsprechende Information an den Benutzer gegeben wird. Die Speicherplätze 51 bis 54 werden von der zentralen Rechnereinheit 10 unmittelbar nacheinander abgefragt. Folglich wird über das Adress-Signal des Speicherplatzes 52 unmittelbar das zugehörige Bild aus der Speichereinheit 4 abgerufen. So sei einmal davon ausgegangen, daß im Speicherplatz 52 das Adress-Signal eines Bildes entsprechend dem Block
31 von Fig. 2 enthalten sei und auch im Speicherplatz 53 die
gleiche Adresse gespeichert sei. Folglich wird auf dem Anzeigeeinheit auch das Bild entsprechend dem Block 31 dargeboten.
Gemäß Block 31 sind insgesamt sechs verschiedene Tasten mit
einem Speicherinhalt belegt. Wird nun fälschlich die Taste 7
betätigt, so wird dies mit der Tastenabfrage 54 festgestellt
und es kann dann beispielsweise ein akustisches Signal über
den Lautsprecher ausgegeben werden oder es erscheint ein entsprechender Hinweis auf Bildschirm des Anzeigegerätes.

Die nachfolgenden Speicherplätze 55 bis 61 sind den jeweiligen
Tasten 0,1 bis 6 zugeordnet. Wird beispielsweise die Taste 6
betätigt, so wird über den Zeiger T6 die Adresse des nächsten
Statusblockes 41 ausgegeben. Die Adress-Signale Start und Stop
sollen gemäß Fig. 2 dem Block 32 entsprechen. Wird hingegen
die Taste 2 der Tastatur 16 betätigt, so wird über den Zeiger
T2 die Adresse des übernächsten Statusblockes 42 ausgegeben.
Mit dem Adress-Signal Start und Adress-Signal Stop wird in der
Speichereinheit 4 die Bildnummer eines Bildes entsprechend dem
Block 33 von Fig. 2 angefahren. Wird hingegen die Taste Null
betätigt, so wird das Adress-Signal des vorangegangenen Statusblockes ausgegeben und dieser wird dann wiederum vom Rechner 10 abgefragt. Sämtliche, hier nur beispielshaft dargestellten Statusblöcke weisen den gleichen Aufbau und die gleiche Art der Auflistung von Speicheradressen auf, wobei erfindungsgemäß eine vorgegebene Anzahl der Adressen, und zwar
zumindest die ersten drei Speicherplätze von dem Rechner im
Rahmen der Erfindung automatisch abgefragt werden. Die nachfolgenden Speicherplätze sind für die Tastenabfrage vorgesehen, wobei entsprechend der eingegebenen Adresse des jeweiligen Speicherplatzes auf den jeweils gewünschten Statusblock
des Speichers gefahren werden kann. Es ist ersichtlich, daß
auf diese sehr übersichtliche Weise mit Sprungbefehlen, Verzweigungen oder über Zeiger auf den jeweils gewünschten übergeordneten oder nachfolenden Speicherplatz in der derartigen
Auflistung gefahren werden kann.

## Bezugszeichenliste

| | |
|---|---|
| 2 | Bildschirm |
| 4 | Speichereinheit |
| 6 | Monitor |
| 8 | Steuergerät |
| 9 | Schnittstelle |
| 10 | Rechner, CPU |
| 12 | Adress-Speicher |
| 14 | Abfrageeinheit |
| 16 | Eingabeeinheit |
| 18 | Ziffer-Taste |
| 20, 22, 24 | Wahl-Taste |
| 25 | Sensor |
| 26 | weiterer Speicher |
| 27 | Verbindung |
| 28 | Mischstufe |
| 29 | Lautsprecher |
| 30 bis 35 | Block |
| 40, 41, 42 | Statusblock |
| 51 bis 61 | Speicherplatz |

Patentansprüche

1. Einrichtung mit einer Speichereinheit für Informationsmengen mit einer Eingabeeinheit, die Tasten oder dergleichen
aufweist, mit einem Speicherplätze enthaltenden Speicher und
mit einem Rechner, der insbesondere in einer Steuereinheit
enthalten ist, um bei Betätigung einer Taste den Speicher zu
aktivieren und auf einem Anzeigegerät die Informationsmengen
darzustellen,
dadurch gekennzeichnet, daß in den Speicherplätzen (51 bis 61)
des Speichers (12) vorgebbare Befehlsfolgen, insbesondere in
Form von Statusblöcken (40 bis 42), vorgesehen sind, die zumindest teilweise mittels des Rechners (10) abfragbar sind,
daß den Tasten (18) jeweils in den Statusblöcken (40 bis 42)
entsprechende Speicherplätze (55 bis 61) zugeordnet sind,
daß beim Betätigen einer der Tasten (18) oder dergleichen aus
dem vom Rechner (10) momentan aufgerufenen Statusblock (40 bis
42) der zugeordnete Speicherplatz (55 bis 60) zur Abgabe eines
Adress-Signales aktiviert wird, wobei die in der Speichereinheit (4) gespeicherten Informationsmengen, die zur Verkaufsförderung dienen oder Informationen über ein Produkt oder
dergleichen enthalten, abgerufen werden.

2. Einrichtung nach Anspruch 1, dadurch gekennzeichnet, daß in
dem Speicher (12) die Befehle bzw. Adressen- und/oder Funktionssignale hintereinander aufgelistet sind und vom Rechner
(10) nacheinander abfragbar sind, wobei über Verzweigungen,
Zeiger oder Sprungbefehle auf übergeordnete oder nachfolgende
Speicherplätze gefahren werden kann.

3. Einrichtung, insbesondere nach Anspruch 1 oder 2, dadurch
gekennzeichnet, daß mittels der Eingabeeinheit (16) bei Betätigung einer der Tasten (18) oder dergleichen ein Eingabesignal abgebbar ist, daß in dem Speicher (12) Adress- und/oder
Funktionssignale gespeichert sind, die mittels des Rechners
(10) abrufbar sind und daß eine Abfrageeinheit (14) vorgesehen ist, über welche eine betätigte Taste (18) eine Eingabeeinheit (16) und somit das zugehörende Eingabesignal feststellbar ist und der Speicher (12) zur Ausgabe des gewünschten Signales aktiviert wird.

4. Einrichtung nach Anspruch 3, dadurch gekennzeichnet, daß ein Statusblock (40 bis 42) die mit dem Rechner (10) aufrufbaren Signale für Standbild und/oder Bildsequenz und/oder Tastenabruf und/ oder Anzahl der belegten Tasten sowie für die einzelnen Tasten aufweist.

5. Einrichtung nach einem der vorhergehenden Ansprüche, dadurch gekennzeichnet, daß zwischen der Speichereinheit (4) und dem Steuergerät (8) eine standardisierte Schnittstelle (9), insbesondere V-24-Schnittstelle vorgesehen ist.

6. Einrichtung nach einem der vorhergehenden Ansprüche, dadurch gekennzeichnet, daß mit dem Steuergerät (8) wenigstens ein weiterer Speicher (26), insbesondere für Text- und / oder Toninformationen verbunden ist, welche in Abhängigkeit eines Signales des Speichers (10) entweder unmittelbar, beispielsweise über einen Lautsprecher (29), ausgebbar oder über eine Mischstufe (28) dem Monitor (6) zuführbar sind.

7. Einrichtung, insbesondere nach Anspruch 6, dadurch gekennzeichnet, daß der Speicher (26) als Zwischenspeicher für in der Speichereinheit (4), insbesonderen Bildplatte gespeicherte Informationen dient, welche beim Abspielen einer Bildsequenz gespeichert und bei der Anzeige eines Standbildes entsprechend ausgegeben werden.

8. Einrichtung nach Anspruch 7, dadurch gekennzeichnet, daß die in den Zwischenspeicher zu übernehmenden Informationen in einer Tonspur parallel zu den Bildern einer Bildsequenz oder in einzelnen Zeilen zwischen Bildern oder Halbbildern einer Bildsequenz der Speichereinheit (4) gespeichert sind.

FIG.1

FIG. 2

FIG. 3